# EUROPEAN PATENT APPLICATION

(11) **EP 4 818 114 A1**
(43) Date of publication of application: **07.10.2026**
(21) Application number: 24881424.6
(22) Date of filing: 11.10.2024
(51) Int. Cl.: C01B 25/10, B01D 3/00, B01D 3/14, B01D 5/00

(54) **SYNTHESIS METHOD FOR PHOSPHORUS PENTAFLUORIDE AND SYNTHESIS DEVICE THEREFOR**

(30) Priority: 25.10.2023 CN 202311388380
(71) Applicant: Shinghwa Amperex Technology (Dongying) Co., Ltd., Dongying, Shandong 257503 (CN); Shida Shinghwa Advanced Material Group Co., Ltd., Dongying, Shandong 257503 (CN)
(72) Inventor: GUO, Jianjun, Shandong 257503 (CN); YAN, Zizhen, Shandong 257503 (CN); LI, Guangke, Shandong 257503 (CN); NIU, Leilei, Shandong 257503 (CN); ZHANG, Ming, Shandong 257503 (CN)
(74) Representative: Meyer-Dulheuer MD Legal Patentanwälte PartG mbB
(86) International application number: PCT/CN2024/124083
(87) International publication number: WO 2025/087058

(57) **Abstract**

The present invention discloses a synthesis method and synthesis device for phosphorus pentafluoride. The synthesis method includes: continuously feeding hydrogen fluoride, liquid chlorine, and liquid yellow phosphorus into a reactive distillation column for reaction to obtain phosphorus pentafluoride gas, where a molar ratio of the hydrogen fluoride to the liquid chlorine to the liquid yellow phosphorus is 8-12:4-6:1-3. According to the present invention, the hydrogen fluoride, the liquid chlorine, and the liquid yellow phosphorus are used as raw materials. In the reactive distillation column, the liquid yellow phosphorus pre-reacts with the liquid chlorine and then reacts with the hydrogen fluoride, thus synthesizing the phosphorus pentafluoride gas by a one-step method. The preparation process is simple. The synthesis device has a stable and reliable structure, and is very suitable for large-scale production and application.

## Description

The present application claims priority to Chinese Patent Application No. 2023113883806, filed with the China National Intellectual Property Administration on October 25, 2023 and entitled "SYNTHESIS METHOD AND SYNTHESIS DEVICE FOR PHOSPHORUS PENTAFLUORIDE", which is incorporated herein by reference in its entirety.

### TECHNICAL FIELD

The present invention belongs to the field of chemical synthesis, and particularly relates to a synthesis method for phosphorus pentafluoride. The present invention further relates to a synthesis device adopted by the synthesis method.

### BACKGROUND

Phosphorus pentafluoride (chemical formula: PF₅) is a phosphorus halide compound. The oxidation number of the phosphorus atom is +5, and the molecule contains a three-center four-electron bond. Phosphorus pentafluoride is a colorless gas with a pungent odor under normal temperature and pressure, is highly irritating to the skin, eyes, and mucous membranes, and is a highly active compound. In moist air, phosphorus pentafluoride hydrolyzes violently to produce toxic and corrosive white fume of hydrogen fluoride. Phosphorus pentafluoride is often used as a catalyst for polymerization. The application of phosphorus pentafluoride in the field of new energy materials is usually used to react with lithium fluoride in hydrogen fluoride or another solvent to synthesize lithium hexafluorophosphate, serving as an electrolyte for new energy batteries.

There are many ways to synthesize phosphorus pentafluoride. The most common way is that phosphorus pentachloride reacts with liquid or gaseous hydrogen fluoride to produce gaseous phosphorus pentafluoride, accompanied by hydrogen chloride gas as a by-product at 5 times the molar ratio. The preparation process is complicated and the by-product content is very high.

For example, the Chinese Invention Patent No. CN104261369B discloses a process for synthesizing phosphorus pentafluoride using polyphosphoric acid and anhydrous hydrogen fluoride as starting materials. The method includes: first synthesizing an aqueous solution of hexafluorophosphoric acid, then contacting the aqueous solution with sulfur trioxide or fuming sulfuric acid for dehydration, heating the mixture to obtain phosphorus pentafluoride and hydrogen fluoride as decomposition products of hexafluorophosphoric acid, and then introducing the two gases into a pressurized distillation column for separation, thus obtaining pure phosphorus pentafluoride from the top of the column and hydrogen fluoride from the bottom of the column. Phosphorus pentafluoride produced by this process does not contain hydrogen chloride, but only a trace amount of hydrogen fluoride. However, this process produces a large amount of dilute sulfuric acid as a by-product that needs to be treated. A Chinese Invention Patent Application Publication No. CN115724444A discloses a technology for synthesizing phosphorus pentafluoride using phosphoric acid, calcium fluoride, and concentrated sulfuric acid as raw materials. In this process, the calcium fluoride first reacts with the concentrated sulfuric acid to obtain hydrogen fluoride, and then the hydrogen fluoride reacts with the phosphoric acid to obtain an intermediate product hexafluorophosphoric acid. Then, the hexafluorophosphoric acid is decomposed by heating to obtain phosphorus pentafluoride and hydrogen fluoride. Although the calcium fluoride and the concentrated sulfuric acid are used as raw materials, essentially a reaction between phosphoric acid and hydrogen fluoride occurs, and reaction equations are H₃PO₄+6HF=HPF₆+4H₂O; and HPF₆=PF₅+HF. A Chinese Invention Patent No. CN101570328B discloses a technology for synthesizing phosphorus pentafluoride using phosphorus pentoxide and hydrogen fluoride as raw materials, which also follows the route of first producing hexafluorophosphoric acid, and then decomposing the hexafluorophosphoric acid to obtain phosphorus pentafluoride. A Chinese Patent No. CN110072807B discloses a technology for synthesizing phosphorus pentafluoride in a reaction vessel using phosphorus trichloride, liquid chlorine, and hydrogen fluoride as raw materials under a pressure ranging from -10 KPaG to 50 KPaG, which can be performed continuously or batchwise.

Therefore, it is desired to find a new technical solution for the synthesis of phosphorus pentafluoride.

### SUMMARY

In view of this, an objective of the present invention is to provide a synthesis method and synthesis device for phosphorus pentafluoride. Hydrogen fluoride, liquid chlorine, and liquid yellow phosphorus are used as raw materials. In a reactive distillation column, the liquid yellow phosphorus pre-reacts with the liquid chlorine and then reacts with the hydrogen fluoride, thus synthesizing phosphorus pentafluoride gas by a one-step method. The preparation process is simple. The synthesis device has a stable and reliable structure, and is very suitable for large-scale production and application.

Technical solutions of the present invention are as follows:
A synthesis method for phosphorus pentafluoride includes continuously feeding hydrogen fluoride, liquid chlorine, and liquid yellow phosphorus into a reactive distillation column for reaction to obtain phosphorus pentafluoride gas, where a molar ratio of the hydrogen fluoride to the liquid chlorine to the liquid yellow phosphorus is 8-12:4-6:1-3.

Preferably, the molar ratio of the hydrogen fluoride to the liquid chlorine to the liquid yellow phosphorus is 9-11:4.5-5.5:1.5-2.5.

Preferably, a column bottom reaction temperature of the reactive distillation column is from 60°C to 80°C, and a column top temperature is from -50°C to 30°C; and a reaction pressure of the reactive distillation column is from 0.6 MPa to 1.0 MPa.

Preferably, the column bottom reaction temperature of the reactive distillation column is from 62°C to 78°C; the column top temperature is from -45°C to 25°C; and the reaction pressure of the reactive distillation column is from 0.8 MPa to 0.9 MPa
Preferably, a synthesis device for phosphorus pentafluoride includes a reactive distillation column connected to a hydrogen fluoride feed line, a liquid chlorine feed line, and a liquid yellow phosphorus feed line, where the reactive distillation column includes a lower reaction kettle and an upper packing column, the hydrogen fluoride feed line and the liquid chlorine feed line are separately connected to the reaction kettle, the liquid yellow phosphorus feed line is connected to the packing column, a material circulating pump is arranged between the reaction kettle and the packing column, and hydrogen fluoride and liquid chlorine are well mixed in the reaction kettle by means of the material circulating pump and then enter the packing column, pass through the packing column, and then fall into the reaction kettle; and then the hydrogen fluoride feed line, the liquid chlorine feed line, and the liquid yellow phosphorus feed line are simultaneously opened to continuously feed the hydrogen fluoride, the liquid chlorine, and liquid yellow phosphorus respectively, and phosphorus pentafluoride is synthesized according to the above described synthesis method for phosphorus pentafluoride.

Preferably, an overhead condenser is arranged at the top of the reactive distillation column, and an uncondensed gas output end of the overhead condenser is connected to a product line of the phosphorus pentafluoride.

Preferably, an end of the hydrogen fluoride feed line is connected to a hydrogen fluoride feed pump, the liquid chlorine feed line is connected to a liquid chlorine feed pump, and the liquid yellow phosphorus feed line is connected to a liquid yellow phosphorus feed pump, where a mass flowmeter is arranged between each of the feed pumps and a corresponding feed line thereof.

Preferably, the packing column includes a first packing section close to the top of the column and a second packing section close to the reaction kettle, the liquid yellow phosphorus feed line is connected to a connecting section between the first packing section and the second packing section, and the material circulating pump is arranged between the connecting section and the reaction kettle.

Preferably, a circulating heat extractor for introducing circulating water is arranged between the material circulating pump and the reaction kettle, and a temperature of the circulating water is from 20°C to 40°C; and a circulating mass flowmeter is arranged between the circulating heat extractor and the material circulating pump.

Preferably, a column top pressure gage and a column top thermometer are separately arranged at the top of the reactive distillation column, and the reaction kettle is provided with a reaction kettle pressure gage and a reaction kettle thermometer.

According to the present invention, the hydrogen fluoride, the liquid chlorine, and the liquid yellow phosphorus are used as raw materials. In the reactive distillation column, the liquid yellow phosphorus pre-reacts with the liquid chlorine and then reacts with the hydrogen fluoride, thus synthesizing phosphorus pentafluoride gas by a one-step method. The preparation process is simple. The synthesis device has a stable and reliable structure, and is very suitable for large-scale production and application.

### DESCRIPTION OF THE DRAWINGS

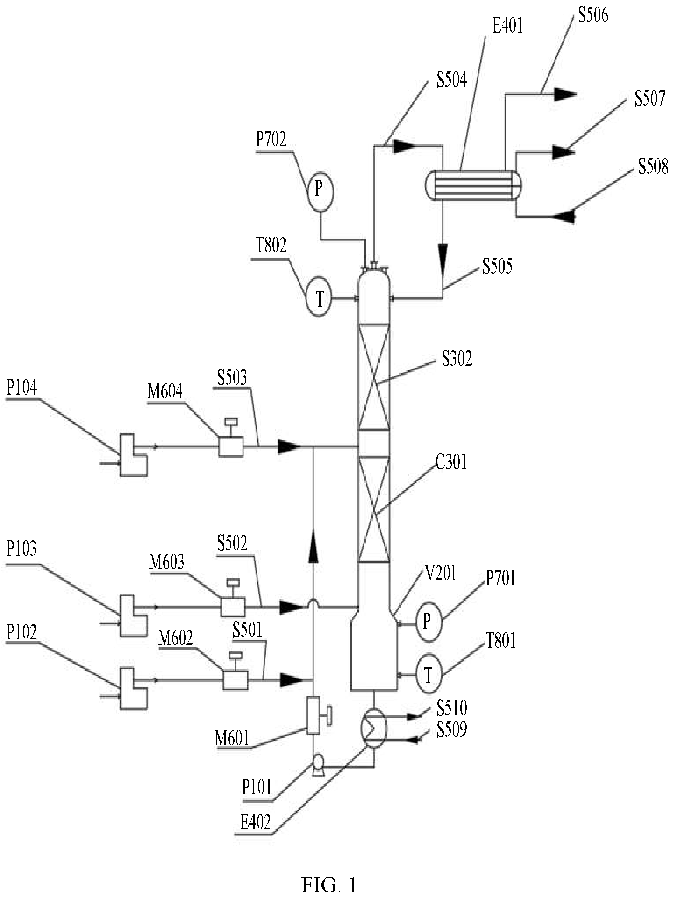

FIG. 1 is a schematic structural diagram of a synthesis device for phosphorus pentafluoride according to a specific embodiment of the present invention.

### DESCRIPTION OF EMBODIMENTS

This embodiment provides a synthesis method for phosphorus pentafluoride, including continuously feeding hydrogen fluoride, liquid chlorine, and liquid yellow phosphorus into a reactive distillation column for reaction to obtain phosphorus pentafluoride gas, where a molar ratio of the hydrogen fluoride to the liquid chlorine to the liquid yellow phosphorus is 8-12:4-6:1-3. Preferably, in this embodiment, the molar ratio of the hydrogen fluoride to the liquid chlorine to the liquid yellow phosphorus is 9-11:4.5-5.5:1.5-2.5.

Preferably, in this embodiment, a column bottom reaction temperature of the reactive distillation column is from 60°C to 80°C, and a column top temperature is from -50°C to -30°C; and a reaction pressure of the reactive distillation column is from 0.6 MPa to 1.0 MPa. More preferably, in this embodiment, the column bottom reaction temperature of the reactive distillation column is from 62°C to 78°C; the column top temperature is from -45°C to 25°C; and the reaction pressure of the reactive distillation column is from 0.8 MPa to 0.9 MPa.

As shown in FIG. 1, this embodiment further provides a synthesis device for phosphorus pentafluoride. The synthesis device includes a reactive distillation column connected to a hydrogen fluoride feed line S501, a liquid chlorine feed line S502, and a liquid yellow phosphorus feed line S503, where the reactive distillation column includes a lower reaction kettle V201 and an upper packing column. The hydrogen fluoride feed line S501 and the liquid chlorine feed line S502 are separately connected to the reaction kettle V201, and the liquid yellow phosphorus feed line S503 is connected to the packing column. A material circulating pump P101 is arranged between the reaction kettle V201 and the packing column. Preferably, in this embodiment, the packing column includes a first packing section C302 close to the top of the column and a second packing section C301 close to the reaction kettle, the liquid yellow phosphorus feed line S503 is connected to a connecting section between the first packing section C302 and the second packing section C301, and a material circulating pump P101 is arranged between the connecting section and the reaction kettle V201. Preferably, in this embodiment, an end of the hydrogen fluoride feed line S501 is connected to a hydrogen fluoride feed pump P102, the liquid chlorine feed line S502 is connected to a liquid chlorine feed pump P103, and the liquid yellow phosphorus feed line S503 is connected to a liquid yellow phosphorus feed pump P104. A hydrogen fluoride mass flowmeter M602 is arranged between the hydrogen fluoride feed pump P102 and a corresponding feed line thereof, a liquid chlorine mass flowmeter M603 is arranged between the liquid chlorine feed pump P103 and a corresponding feed line thereof, and a liquid yellow phosphorus mass flowmeter M604 is arranged between the liquid yellow phosphorus feed pump P104 and a corresponding feed line thereof.

Specifically preferably, in this embodiment, nitrogen is introduced into the reactive distillation column to drive away air; liquid hydrogen fluoride is injected into the reaction kettle V201 through the hydrogen fluoride feed pump P102 and the hydrogen fluoride feed line S501 until the liquid hydrogen fluoride reaches a preset liquid level in the reaction kettle V201; liquid chlorine is injected into the reaction kettle V201 through the liquid chlorine feed pump P103 and the liquid chlorine feed line S502 until the liquid chlorine reaches a preset liquid level in the reaction kettle V201.

In this embodiment, hydrogen fluoride and liquid chlorine are well mixed in the reaction kettle V201 by means of the material circulating pump P101 and then enter the second packing section C301 of the packing column, pass through the second packing section C301 and then fall into the reaction kettle V201. Then, the hydrogen fluoride feed line S501, the liquid chlorine feed line S502, and the liquid yellow phosphorus feed line S503 are simultaneously opened to continuously feed the hydrogen fluoride, the liquid chlorine, and the liquid yellow phosphorus respectively according to a preset molar ratio, and phosphorus pentafluoride is synthesized according to the above described synthesis method for phosphorus pentafluoride in this embodiment.

Preferably, in this embodiment, an overhead condenser E401 is arranged at the top of the reactive distillation column, and a column top gas phase line S504 and a column top reflux line S505 are connected between the top of the column and the overhead condenser E401, thereby realizing partial condensation and reflux of a column top gas phase product. In addition, an uncondensed gas output end of the overhead condenser E401 is connected to a product line S506 of phosphorus pentafluoride, the gas is extracted to a gas buffer tank through the product line S506 of phosphorus pentafluoride, and the mixed gas of phosphorus pentafluoride and hydrogen chloride is continuously extracted by a one-step method. Further preferably, in this embodiment, a -50°C refrigerant is introduced into the overhead condenser E401 through a refrigerant inlet line S508 and a refrigerant return line S507, so that the refrigerant is circulated in the line inside the overhead condenser E401. It is suggested that a fluctuation range of the refrigerant temperature is controlled within a range of ±6°C, so as not to affect a condensation effect to a largest extent, and to ensure that a condition for condensation of the gas in the reactive distillation column is met.

Preferably, in this embodiment, a circulating heat extractor E402 for introducing circulating water is arranged between the material circulating pump P101 and the reaction kettle V201 and includes a circulating water inlet line S509 and a circulating water return line S510, and the temperature of the circulating water ranges from 20°C to 40°C. Specifically preferably, in this embodiment, the temperature of the circulating water is set at 32°C; and a circulating mass flowmeter M601 is arranged between the circulating heat extractor E402 and the material circulating pump P101.

Preferably, in this embodiment, a column top pressure gage P702 and a column top thermometer T802 are separately arranged at the top of the reactive distillation column, and the reaction kettle V201 is provided with a reaction kettle pressure gage P701 and a reaction kettle thermometer T801.

To enable a person skilled in the art to better understand the technical solutions in the present invention, the technical solutions in the embodiments of the present invention are clearly and completely described below with reference to the accompanying drawings in the embodiments of the present invention. Clearly, the described embodiments are merely some, rather than all, of the embodiments of the present invention. All other embodiments obtained by a person of ordinary skill in the art based on the embodiments of the present invention without creative efforts shall fall within the protection scope of the present invention.

Based on the above described implementation solutions, the present application further provides a specific example, with the implementation process specifically as follows:

A -50°C refrigerant was introduced into an overhead condenser E401 through a refrigerant inlet line S508 and a refrigerant return line S507, so that the refrigerant was circulated in the line inside the overhead condenser E401, to meet a condition for condensation of the gas inside a reactive distillation column.

The reactive distillation column was vacuumized to -0.1 MPa, then high-purity nitrogen was introduced to make the pressure at the top of the reactive distillation column less than or equal to 0.01 MPa, vacuumizing and nitrogen filling were repeated twice, and it was finally ensured that the column was fully filled with nitrogen, which was specifically embodied in the column as follows: nitrogen content ≥ 99.999%, dew point ≤ -60°C, and moisture content ≤ 10 ppm.

Liquid hydrogen fluoride was injected into a reaction kettle V201 with an inner diameter of 250 mm and a height of 500 mm through a hydrogen fluoride feed pump P102 and a hydrogen fluoride feed line S501 until the liquid hydrogen fluoride reached half of the liquid level of the reaction kettle V201. 12 liters of liquid hydrogen fluoride was fed, the feed mass of the liquid hydrogen fluoride was 12.0 kg, and the temperature of the liquid hydrogen fluoride was -5°C.

Liquid chlorine was injected into the reaction kettle V201 through a liquid chlorine feed pump P103 and a liquid chlorine feed line S502 until the liquid level of the reaction kettle V201 reached three quarters, where 6 liters of liquid chlorine was injected, and the mass of injected liquid chlorine was 8.6 kg. During liquid chlorine adding, part of the liquid chlorine was vaporized, and the column top pressure of the reactive distillation column increased, reaching 0.5 MPa.

A material circulating pump P101 was started to well mix materials (liquid chlorine and hydrogen fluoride) in the reaction kettle V201, with the flow rate of the circulating flowmeter M601 being 20 kg/h. The materials in the reaction kettle V201 entered a packing column through an inlet line and an outlet line of the material circulating pump P101, and fell into the reaction kettle V201 after passing through a second packing section C301 of the packing column. The column top temperature and the column bottom temperature were both -5°C.

A liquid yellow phosphorus feed pump P104, a liquid chlorine feed pump P103, and a hydrogen fluoride feed pump P102 were opened simultaneously. Liquid yellow phosphorus was metered by a liquid yellow phosphorus mass flowmeter M604, with the flow rate controlled at 1.0 kg/h. Liquid chlorine was metered by a liquid chlorine mass flowmeter M603, with the flow rate controlled at 2.52 kg/h. Hydrogen fluoride was metered by a hydrogen fluoride mass flowmeter M602, with the flow rate controlled at 5.1 kg/h. With the progress of the reaction, the pressure in the column slowly increased to 0.85 MPa, heat was released from the reaction, and the column bottom temperature and the column top temperature rose to 65°C. A gas phase at the top of the column entered the overhead condenser E401, and was condensed by the -50°C refrigerant in the overhead condenser E401 into a liquid, which flowed back into the column along a column top reflux line S505. A liquid in a first packing section C302 and a second packing section C301 came into contact with the high-temperature gas in the column to transfer cold energy to the gas in the column. Slowly, the column top temperature dropped to -35°C and the pressure stabilized to 0.8 MPa. The flow rate of the refrigerant in the overhead condenser E401 was reduced, so that the gas phase at the top of the column was no longer completely condensed in the overhead condenser E401, and a part of the gas phase that was not condensed was extracted to a receiving buffer tank along a product line S506.

To adjust the temperature of the materials in the reaction kettle V201, the temperature in the reaction kettle V201 (that is, the column bottom temperature) could be kept at 72°C stably by adjusting the flow rate of the refrigerant circulating cooling water in the circulating heat extractor E402.

The following five groups of products were extracted from the product line S506 of phosphorus pentafluoride and tested. See Table 1 below for test results:

**Table 1**

| No. | Chlorine content (mass, %) | Hydrogen fluoride content (mass, %) | Phosphorus pentafluoride content (mass, %) | Hydrogen chloride content (mass, %) |
|---|---|---|---|---|
| 1 | Not detected | 0.11 | 39.95 | 59.94 |
| 2 | Not detected | 0.12 | 39.94 | 59.94 |
| 3 | Not detected | 0.13 | 39.93 | 59.94 |
| 4 | Not detected | 0.12 | 39.95 | 59.93 |
| 5 | Not detected | 0.11 | 39.96 | 59.93 |

It would be obvious to a person skilled in the art that the present invention is not limited to the details of the foregoing exemplary embodiments, and the present invention can be implemented in other specific forms without departing from the spirit or essential features of the present invention. Therefore, the embodiments should be regarded in all respects as examples rather than as restrictive, and the scope of the present invention is defined by the appended claims rather than the above descriptions. Therefore, all changes falling within the meanings and scope of equivalent elements of the claims are included in the present invention. Any reference numeral in the claims shall not be construed as limiting the claims.

In addition, it should be understood that, although this specification has been described with reference to embodiments, not every embodiment includes only one independent technical solution, and such description of this specification is by way of clarity only. A person skilled in the art should take this specification as a whole, and the technical solutions of the embodiments may be combined as appropriate to obtain other embodiments that can be understood by a person skilled in the art.

## Claims

1. A synthesis method for phosphorus pentafluoride, comprising continuously feeding hydrogen fluoride, liquid chlorine, and liquid yellow phosphorus into a reactive distillation column for reaction to obtain phosphorus pentafluoride gas, wherein a molar ratio of the hydrogen fluoride to the liquid chlorine to the liquid yellow phosphorus is 8-12:4-6:1-3.

2. The synthesis method for phosphorus pentafluoride according to claim 1, wherein the molar ratio of the hydrogen fluoride to the liquid chlorine to the liquid yellow phosphorus is 9-11:4.5-5.5:1.5-2.5.

3. The synthesis method for phosphorus pentafluoride according to claim 1, wherein a column bottom reaction temperature of the reactive distillation column is from 60°C to 80°C, and a column top temperature is from -50°C to 30°C; and a reaction pressure of the reactive distillation column is from 0.6 MPa to 1.0 MPa.

4. The synthesis method for phosphorus pentafluoride according to claim 3, wherein the column bottom reaction temperature of the reactive distillation column is from 62°C to 78°C; the column top temperature is from -45°C to 25°C; and the reaction pressure of the reactive distillation column is from 0.8 MPa to 0.9 MPa.

5. A synthesis device for phosphorus pentafluoride, wherein the synthesis device comprises a reactive distillation column connected to a hydrogen fluoride feed line, a liquid chlorine feed line, and a liquid yellow phosphorus feed line, wherein the reactive distillation column comprises a lower reaction kettle and an upper packing column, the hydrogen fluoride feed line and the liquid chlorine feed line are separately connected to the reaction kettle, the liquid yellow phosphorus feed line is connected to the packing column, a material circulating pump is arranged between the reaction kettle and the packing column, and hydrogen fluoride and liquid chlorine are well mixed in the reaction kettle by the material circulating pump and then enter the packing column, pass through the packing column, and then fall into the reaction kettle; and then the hydrogen fluoride feed line, the liquid chlorine feed line, and the liquid yellow phosphorus feed line are simultaneously opened to continuously feed the hydrogen fluoride, the liquid chlorine, and liquid yellow phosphorus respectively, and phosphorus pentafluoride is synthesized according to the synthesis method for phosphorus pentafluoride according to one of claims 1 to 4.

6. The synthesis device for phosphorus pentafluoride according to claim 5, wherein an overhead condenser is arranged at the top of the reactive distillation column, and an uncondensed gas output end of the overhead condenser is connected to a product line of the phosphorus pentafluoride.

7. The synthesis device for phosphorus pentafluoride according to claim 5, wherein an end of the hydrogen fluoride feed line is connected to a hydrogen fluoride feed pump, the liquid chlorine feed line is connected to a liquid chlorine feed pump, and the liquid yellow phosphorus feed line is connected to a liquid yellow phosphorus feed pump, wherein a mass flowmeter is arranged between each of the feed pumps and a corresponding feed line thereof.

8. The synthesis device for phosphorus pentafluoride according to claim 5, wherein the packing column comprises a first packing section close to the top of the column and a second packing section close to the reaction kettle, the liquid yellow phosphorus feed line is connected to a connecting section between the first packing section and the second packing section, and the material circulating pump is arranged between the connecting section and the reaction kettle.

9. The synthesis device for phosphorus pentafluoride according to claim 5, wherein a circulating heat extractor for introducing circulating water is arranged between the material circulating pump and the reaction kettle, and a temperature of the circulating water is from 20°C to 40°C; and a circulating mass flowmeter is arranged between the circulating heat extractor and the material circulating pump.

10. The synthesis device for phosphorus pentafluoride according to claim 5, wherein a column top pressure gage and a column top thermometer are separately arranged at the top of the reactive distillation column, and the reaction kettle is provided with a reaction kettle pressure gage and a reaction kettle thermometer.
